# EUROPEAN PATENT APPLICATION

(11) **EP 4 080 520 A1**
(43) Date of publication of application: **26.10.2022**
(21) Application number: 19928293.0
(22) Date of filing: 15.10.2019
(51) Int. Cl.: G21C 3/32

(54) **BOTTOM NOZZLE OF NUCLEAR REACTOR FUEL ASSEMBLY**

(71) Applicant: Joint-Stock Company "TVEL", Moscow 115409 (RU)
(72) Inventor: IVANOV, Roman Sergeevich, g. Novosibirsk 630110 (RU); SHUSTOV, Mstislav Aleksandrovich, g. Novosibirsk 630017 (RU); ENIN, Anatoly Alekseevich, g. Novosibirsk 630110 (RU); POLYAKOV, Dmitry Leonidovich, g. Novosibirsk 630129 (RU); YURIN, Petr Mikhailovich, g. Novosibirsk 630129 (RU)
(74) Representative: Friese Goeden Patentanwälte PartGmbB
(86) International application number: PCT/RU2019/000735
(87) International publication number: WO 2021/075992

(57) **Abstract**

The nuclear reactor fuel assembly bottom nozzle comprises a support element, a diffuser, a hexagonal frame, connected coaxially to each other, with variable height fins fixed in non-adjacent corners of the hexagonal frame with a displacement from the plane of symmetry of the corners so that the end of one rib is mated with the side surface of the other rib. The profile of the fins is made with a ledge on the side surface of the fins and a thinning of the upper edge of the fins, the ledge serves to install the rim of the anti-debris filter, and the thinning serves to abut against the support grid of the fuel element bundle.

The thinning of the fins can be made in the form of teeth with flat tops.

The technical result is an increased reliability of the bottom nozzle and of the fuel assembly as a whole due to reduced hydraulic resistance of the bottom nozzle and reduced vibration loading of fuel elements.

## Description

### TECHNICAL FIELD OF THE INVENTION

The invention relates to nuclear engineering, namely to fuel assemblies of nuclear power pressurized water reactors.

### PRIOR ART

To increase reliability of the fuel assembly and protect it during operation from damage by debris particles, an anti-debris filter is installed in the bottom nozzle of the fuel assembly, placed between the fins of the bottom nozzle in the largest flow cross-section of the bottom nozzle in order to reduce hydraulic resistance. Modern anti-debris filters typically consist of a filter element and a rim that connects the filter to the bottom nozzle.

The nuclear reactor fuel assembly bottom nozzle 25 is known (patent of the Russian Federation No. 2079170, published on 10.05.1997), equipped with fins adjacent with their ends to the lower plane of the lower support grid between rows of holes for fuel elements, the disadvantage of which is the partial overlapping of holes for the passage of coolant through the lower support grid, as well as the lack of possibility to align the field of coolant flow rates along the cross-section in the bottom nozzle.

The closest in technical essence and the achieved result to the proposed technical solution is the nuclear reactor fuel assembly bottom nozzle (patent of the Russian Federation No. 2325714, published on 10.12.2007), comprising a coaxially connected base, a support element, a diffuser, a hexagonal frame with star-shaped fins fixed to said frame for mounting the support grid of the fuel element bundle of the fuel assembly.

The disadvantage of this bottom nozzle of the fuel assembly is a reduction of its flow cross-section when installing anti-debris filters, presence of a shaded section for the coolant flow at the junction point of the fins, occurrence of turbulence of the coolant flow at the junction point of the bottom nozzle fin with the rim of the anti-debris filter and, as a result, an increase in the coefficient of hydraulic resistance leading to increased vibration loading of fuel elements.

The proposed design of the nuclear reactor fuel assembly bottom nozzle eliminates these shortcomings.

### SUMMARY OF THE INVENTION

The technical objective of the invention is to increase the reliability of the bottom nozzle and, accordingly, of the fuel assembly as a whole.

To solve this problem, it is necessary to create a bottom nozzle design that allows excluding a reduction in the flow cross-section, minimizing the shaded central section that affects the coolant flow, excluding the turbulence of the coolant flow at the points of contact of the bottom nozzle fins with the rim of the installed anti-debris filter and maintaining the strength properties of the bottom nozzle.

An increased coefficient of core hydraulic resistance leads to a reduction of the coolant flow through the reactor and, as a result, to deterioration of core cooling in nominal mode and modes with abnormal operation. An increase in the pressure drop on the core caused by an increase in its hydraulic resistance coefficient leads to a decrease in the margin before the fuel assembly rises.

The technical result of the invention is a reduction of hydraulic resistance of the bottom nozzle and, as a result, of vibration loading of fuel elements.

The technical result is achieved by the fact that:
- the nuclear reactor fuel assembly bottom nozzle comprises a support member, a diffuser, and a hexagonal frame on which variable height fins are fixed, connected coaxially;
- the fins fixed to the hexagonal frame are installed in non-adjacent corners of the frame with a displacement from the plane of symmetry of the corners so that the end of one fin mates with the side surface of the other fin;
- there is a ledge on the side surface of the fins fixed on the hexagonal frame, there is a thinning on the upper end of these fins, the ledge serves to install the rim of the anti-debris filter, and the thinning serves to abut against the support grid of the fuel element bundle;
- when thinning the fins fixed on the hexagonal frame, the upper edges of the fins are made in the form of teeth with flat tops interacting with bridges between the spillage holes of the support grid of the fuel element bundle.

Fixing the fins in the non-adjacent corners of the frame with the displacement and mating of the end of one fin with the side surface of the other one provides a minimum shading of the central part of the bottom nozzle for the coolant without losing the necessary strength of the structure and an increase of the flow cross-section of the bottom nozzle with the installed anti-debris filter. At the same time, hydraulic resistance of the bottom nozzle and, as a result, vibration loading of fuel elements is reduced.

The design of fins with a ledge on the side surface of the fins, thinning of the upper end of the fins and their connection to each other by mating the end of one fin with the side surface of the other one, eliminating the need for a central connecting unit, reduces the metal consumption of the product, as well as the assortment and number of parts used in manufacture of the product.

### Brief description of drawings

The essence of the invention is explained by the drawings, which show:

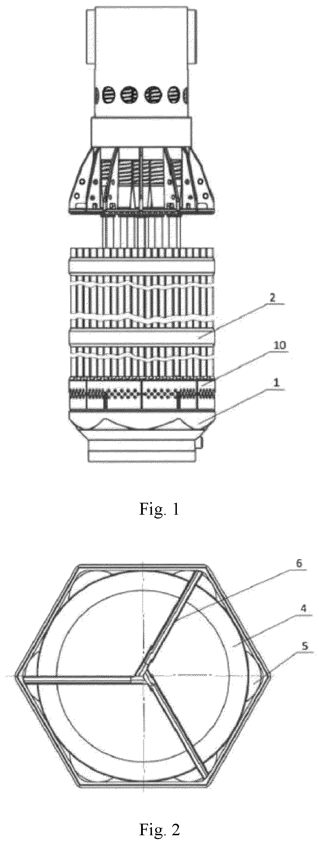

Fig. 1 - fuel assembly, general view;
Fig. 2 - bottom nozzle with fins, top view;

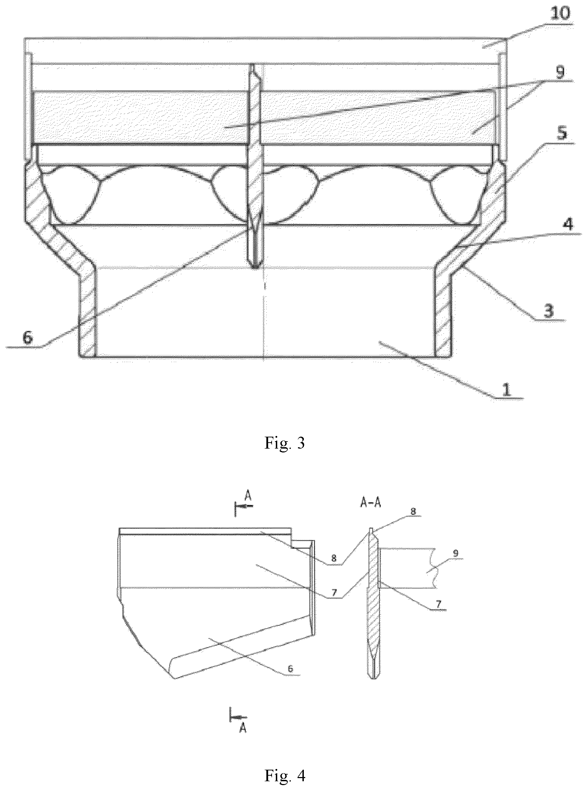

Fig. 3 - bottom nozzle with support grid and anti-debris filter installed, vertical cross-section;
Fig. 4 - bottom nozzle fin, view in two planes;

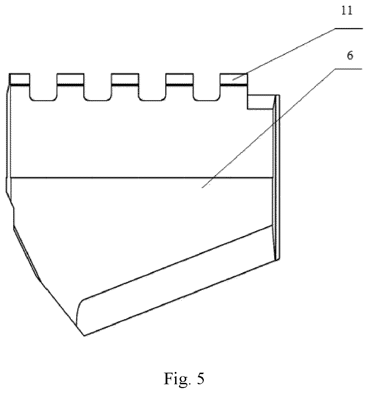

Fig. 5 - bottom nozzle fin with a top edge in the form of teeth with flat tops, main view.

The bottom nozzle 1 of the fuel assembly 2 of the nuclear reactor comprises a support element 3, a diffuser 4, a hexagonal frame 5, connected coaxially to each other. The non-adjacent corners of the hexagonal frame 5 are fixed with a displacement from the plane of symmetry of the corners of the variable height fin 6. The fins 6 have ledges 7 and thinnings 8. The rim of the anti-debris filter 9 is installed in the ledges 7.

The thinning 8 contacts the bridges between the spillage holes of the support grid 10 of the fuel element bundle. The upper thinning of the fin 6 can be made in the form of teeth 11 with flat tops.

The bottom nozzle operates as follows. The coolant enters the bottom nozzle 1 equipped with an anti-debris filter 9 installed with its rim in the ledges 7 of the fin profile 6, flows into the diffuser 4, spreads freely also in radial directions along the fins 6 and approaches the support grid 10 of the fuel element bundle.

Fixing the fins 6 to the non-adjacent corners of the hexagonal frame 5 with a displacement from the plane of symmetry of the corners so that the end of one fin mates with the side surface of the other fin creates conditions for aligning the field of coolant flow rates as the coolant passes the diffuser 4.

Abutting against the thinning 8 of the fin profile 6 of the supporting grid 10 of the fuel element bundle by bridges between the spillage holes eliminates closing of some spillage holes for passage of the coolant and creates possibility of coolant leaks to equalize local flow heterogeneities between adjacent cavities bounded by common fins 6.

The velocity-aligned flow in the cross-section has smaller horizontal velocity components after passing the support grid 10 of the fuel element bundle, therefore, creates smaller vibration-dynamic loads on the fuel elements and their fastening assemblies in the support grid 10 of the fuel element bundle. An improved reliability of the bottom nozzle 1 and the fuel assembly 2 as a whole is provided.

### INDUSTRIAL APPLICABILITY

Thus, the application of the proposed design of the nuclear reactor fuel assembly bottom nozzle allows solving the problem of increasing the reliability of the bottom nozzle due to reducing the hydraulic resistance of the bottom nozzle and vibration loading of fuel elements and is advisable for use in fuel assemblies of nuclear power pressurized water reactors.

## Claims

1. We claim the nuclear reactor fuel assembly bottom nozzle, comprising a support element, a diffuser, a hexagonal frame on which fins are fixed, connected coaxially to each other, **characterized in that** the ribs are made of variable height and are installed in non-adjacent corners of the hexagonal frame with a displacement from the plane of symmetry of the corners so that the end of one fin is mated with the side surface of the other rib, wherein the profile of the fins is made with a ledge on the side surface of the fins and a thinning on the upper end of the fins, the ledge serves to install the rim of the anti-debris filter, and the thinning serves to abut against the support grid of the fuel element bundle.

2. We claim the bottom nozzle according to claim 1, wherein the thinning of the fins is in the form of teeth with flat tops.
